(19)

**Europäisches Patentamt**
**European Patent Office**
**Office européen des brevets**

(11) **EP 2 742 797 A1**

(12) **EUROPEAN PATENT APPLICATION**
published in accordance with Art. 153(4) EPC

(43) Date of publication:
**18.06.2014 Bulletin 2014/25**

(21) Application number: **12822730.3**

(22) Date of filing: **08.08.2012**

(51) Int Cl.:
**A01G 13/02** (2006.01)　　**A01G 9/14** (2006.01)
**D04H 1/544** (2012.01)　　**D04H 3/16** (2006.01)

(86) International application number:
**PCT/JP2012/070262**

(87) International publication number:
**WO 2013/022045 (14.02.2013 Gazette 2013/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2011　JP 2011172799**

(71) Applicant: **Mitsui Chemicals, Inc.**
**Tokyo 105-7117 (JP)**

(72) Inventors:
• **ICHIKAWA, Taro**
**Sodegaura-shi**
**Chiba 299-0265 (JP)**
• **TSUDA, Takeshi**
**Sodegaura-shi**
**Chiba 299-0265 (JP)**

(74) Representative: **HOFFMANN EITLE**
**Patent- und Rechtsanwälte**
**Arabellastrasse 4**
**81925 München (DE)**

(54) **AGRICULTURAL COVERING MATERIAL**

(57)　The purpose of the present invention is to provide an agricultural covering material which has a high light transmittance so that it accelerates the growth of crops and has visual confirmation properties to the inside thereof for cultivators, which has a good growth acceleration effect due to heat retention of soil temperature, can suppress ingress of excess amounts of rainwater, has excellent evenness such as a low unevenness in strength and effective prevention of harmful insects which will fly and gather, and which has proper air-permeability. The agricultural covering material of the present invention includes a nonwoven fabric laminate having (i) a light transmittance of 80% or more, (ii) an air-permeability of 50 to 400 $cm^3/cm^2/sec$ and (iii) a basis weight of 10 to 30 $g/cm^2$.

EP 2 742 797 A1

**Description**

TECHNICAL FIELD

The present invention relates to an agricultural covering material which comprises a nonwoven fabric laminate, and particularly it relates to an agricultural covering material which comprises a nonwoven fabric laminate which material is used suitably for outdoor cultivation, tunnel cultivation, greenhouse cultivation and direct covering (over covering).

TECHNICAL BACKGROUND

Agricultural covering materials are widely used in order to protect crops from outside environmental changes and accelerate the growth of crops. Agricultural covering materials are broadly classified into films and nonwoven fabrics and they are used properly in accordance with their characteristics.

Films have no air-permeability or low air-permeability but have high barrier properties and high transparency (or high shading properties). For example, they are used for heat retention in the period of midwinter (greenhouse cultivation), control of rainwater ingress for fruits, prevention against the growth of weeds and prevention against harmful insects which will fly and gather.

The nonwoven fabrics have slightly lower barrier properties as compared with the films, but they have high air-permeability and hardly cause high-temperature damage in not only the period of midwinter but also the season of mild climate. Owing to their properties, the nonwoven fabrics have a wide allowable range in use. Furthermore, the nonwoven fabrics have more excellent softness, lightweight and shape following property as a material, as compared with the films. On this account, the nonwoven fabrics can be used to cover crops directly, as they are (namely, over covering) unlike the films that are used with tunnel formation, and thereby the use of the nonwoven fabrics is much easier. For example, patent document 1 (Utility Model H4(1992)-8769) discloses an agricultural covering material for over covering which comprises a nonwoven fabric made of hydrophobic fibers having 6 or more deniers and has a basis weight of 10 to 30 $g/m^2$ and a light transmittance of 85% or more.

The agricultural covering material for over covering disclosed in patent document 1 comprises a nonwoven fabric made of thick fibers having 6 or more deniers (about 30 $\mu$m or more) and has a high light transmittance because of having a low amount of diffuse reflected light as compared with a nonwoven fabric made of thin fibers. Therefore, the agricultural covering material has excellent properties such as crop growth acceleration induced by a high amount of sunlight passed through and easy visual confirmation to crops which are cultivated inside the covering for cultivators.

However, the agricultural covering materials comprising the nonwoven fabric made of thick fibers have high air-permeability. Therefore, even when the soil temperature is warm, the soil warm heat is decreased in a bad weather condition or during the night and thereby the crop growth acceleration effect induced by heat retention will be lowered or large amounts of rain water will come into the inside to cause damage by water. The nonwoven fabric which comprises thick fibers occasionally has parts having inferior uniformity and thereby the nonwoven fabric will have breakage or harmful insects will come inside the covering. When the nonwoven fabric which comprises thin fibers is used for the sake of improving these problems, the heat retention effect can be attained but the light transmittance is decreased because the effect of diffuse reflected light is increased caused by the thin fibers. As a result, the balance in the above-described properties will deteriorate so that it may be impracticable to make use of the nonwoven fabric which comprises thin fibers.

Patent document 2 (Utility Model 2501455) discloses an agricultural nonwoven fabric sheet obtainable by piling a plurality of synthetic fiber nonwoven fabrics having a basis weight of 15 to 30 $g/m^2$ and partially unifying them. As disclosed in the example, in the case that nonwoven fabrics which comprise thick fibers having 8 deniers (about 35 $\mu$m) are laminated, the resulting sheet has excellent heat retention properties but has inferior lightweight properties and inferior transparency.

As described above, an agricultural covering material which comprises a nonwoven fabric having high light transmittance, proper air-permeability and high heat retention property has been demanded earnestly.

PRIOR ART

PATENT DOCUMENT

Patent document 1: Utility Model H4(1992)-8769
Patent document 2: Utility Model 2501455

SUMMARY OF THE INVENTION

SUBJECT TO BE SOLVED BY THE INVENTION

The present invention has been done to solve such problems disclosed in the prior art and it is an object of the invention to provide an agricultural covering material which has high light transmittance, thereby has crop growth acceleration and visual confirmation to the inside of the covering for cultivators, which has good crop growth acceleration effect due to heat retention of a soil temperature, suppressing ingress of excess amounts of rainwater, excellent evenness such as a low unevenness in strength and effective prevention of harmful insects which will fly and gather, and which has proper air-permeability.

MEANS FOR SOLVING THE SUBJECT

The present invention provides an agricultural covering material which comprises a nonwoven fabric laminate having:

(i) a light transmittance of 80 % or more,
(ii) an air-permeability of 50 to 400 $cm^3/cm^2/sec$ and
(iii) a basis weight of 10 to 30 $g/m^2$.

EFFECT OF THE INVENTION

The agricultural covering material of the present invention has excellent air-permeability and heat retention property, and further has sufficient light transmittance capable of cultivating crops and visual confirmation properties to crops and also waterproof properties. Therefore, using the agricultural covering material, the harvest time of crops can be advanced, the harvest amount of crops can be increased, crops can be protected from cold-weather damage, poor growth of crops such as spindly growth and the like can be eliminated, or crops can be protected from water damage caused by rainwater and the like or coming of harmful insects.

Moreover, the agricultural covering material of the present invention has a high light transmittance so that cultivators can watch the inside of the covering easily. Furthermore, it comprises a nonwoven fabric having excellent uniformity so that breakage of the nonwoven fabric is not caused while working.

EMBODIMENT FOR CARRYING OUT THE PRESENT INVENTION

<Thermoplastic resin>

The thermoplastic resin which is a material of a nonwoven fabric laminate constituting the agricultural covering material of the present invention is not particularly limited as far as it is a thermoplastic resin capable of forming the nonwoven fabric. As the thermoplastic resin, various known thermoplastic resins can be exemplified. Examples thereof are homopolymers or copolymers of $\alpha$-olefins such as ethylene, propylene, 1-butene, 1-hexene, 4-methyl-1-pentene and 1-octene, i.e. polyolefins such as high-pressure low-density polyethylene, linear low-density polyethylene (so-called LLDPE), high-density polyethylene (so-called HDPE), polypropylene (propylene homopolymer), polypropylene random copolymer, poly-1-butene, poly-4-methyl-1-pentene, ethylene/propylene random copolymer, ethylene/1-butene random copolymer, propylene/1-butene random copolymer and so on, polyesters (polyethylene terephthalate, polybutylene terephthalate or polyethylene naphthalene), polyamides (nylon-6, nylon-66 or polymethaxylene adipamide), polyvinylchloride, polyimide, ethylene/vinyl acetate copolymer, ethylene/vinylacetate/vinylalcohol copolymer, ethylene/(meth)acrylic acid copolymer, ethylene/acrylic acid ester-carbon monoxide copolymer, polyacrylonitrile, polycarbonate, polystyrene, ionomer or mixtures thereof. Among them, more preferable examples are ethylene polymers such as high-pressure low-density polyethylene, linear low-density polyethylene (so-called LLDPE) and high-density polyethylene, propylene polymers such as polypropylene and polypropylene random copolymer, polyethylene terephthalate and polyamide.

From the viewpoint of spinning stability at the time of shape forming, processing properties, air-permeability, softness, light weight properties, heat resistance and hydrophobic properties of nonwoven fabrics, polyolefins are preferred, and particularly a propylene polymer is preferred among the above thermoplastic resins. Namely, as the polyolefin resin does not absorb water substantially, the shrinkage is not observed or is very small in water absorption and drying. Accordingly, it is unnecessary to keep a margin at the time of expanding and laying the agricultural covering material, and further the operation is simple and can be conducted orderly even by beginners. Moreover, after the agricultural covering material is used, even when it is rolled up and kept, it does not cause breakage due to drying and shrinkage thereof.

The thermoplastic resin of the present invention may be mixed with various known additives such as a coloring agent, an antioxidant, a weather stabilizer, a light stabilizer, an anti-blocking agent, a lubricant, a nuclear agent, a pigment, a softener, a hydrophilic agent, a water-repellent, an auxiliary agent, a water-repellent, a filler, a antimicrobial agent or a medical agent within the limit the object of the invention is not missed. Particularly, it is effective to add the antioxidant, the weather stabilizer and the light stabilizer in order to give the durability in the use of the outdoors, and also to add a colorant which has a great influence on plant's growth and activity.

<Propylene polymer>

The propylene polymer of the present invention is preferably a homopolymer of propylene or a copolymer of propylene and a slight amount of one, two or more $\alpha$-olefins having 2 or more carbon atoms (excluding 3 carbon atoms), preferably 2 to 8 carbon atoms (excluding 3 carbon atoms) such as ethylene, 1-butene, 1-pentene, 1-hexene, 1-octene or 4-methyl-1-pentene, with a melting point (Tm) of not lower than 125° C, preferably 130 to 165° C.

The melt flow rate (MFR:ASTMD-1238, 230°C, load 2160g) of the propylene polymer is not particularly limited as far as melt spinning can be conducted. When the propylene polymer is used to a spun bonded nonwoven fabric layer (B), the melt flow rate is usually 1 to 500 g/10 min, preferably 5 to 200 g/10 min, more preferably 10 to 100 g/10 min. When the propylene polymer is used to a melt blown nonwoven fabric layer (B), the melt low rate is usually 10 to 3000 g/10 min, preferably 50 to 2000 g/10 min, more preferably 100 to 1000 g/10 min.

<Agricultural covering material>

The agricultural covering material of the present invention comprises a nonwoven fabric laminate. The nonwoven fabric laminate has the following properties. (i) The light transmittance is 80 % or more, (ii) the air-permeability is 50 to 400 cm$^3$/cm$^2$/sec, preferably the lower limit thereof is 100 cm$^3$/cm$^2$/sec or more, more preferably 150 cm$^3$/cm$^2$/sec or more and the upper limit thereof is preferably not more than 350 cm$^3$/cm$^2$/sec, and (iii) the basis weight is 10 to 30 g/m$^2$, preferably 10 to 25 g/m$^2$, more preferably 10 to 20 g/m$^2$.

The use of an agricultural covering material having a light transmittance of less than 80 % will cause a possibility such that spindly growth of crops will occur by lack of sunlight and thereby the good growth of crops will be not secured. Although the upper limit of the light transmittance of the agricultural covering material is not particularly restricted, it is generally about 98 %.

The agricultural covering material preferably has an air-permeability in the above range because the balance between the air-permeability and the heat retention property is excellent.

When the agricultural covering material has a basis weight of less than 10 g/m$^2$, it cannot make a form as a nonwoven fabric or it has poor strength and heat retention property so that it cannot withstand the use as an agricultural covering material. On the other hand, when the agricultural covering material has a basis weight of over 30 g/m$^2$, the light transmittance will be worse or the lightweight properties will be inferior and thereby it cannot withstand the use as an agricultural covering material. The agricultural covering material having inferior lightweight properties is not preferable because it causes a problem such that it does damage to crops in the use that it covers directly on the crops (over covering) or the material is heavy and the handling thereof is difficult for workers.

In order that the agricultural covering material of the present invention withstands operations at the time of expanding and laying or removal thereof, and the weather during the use thereof, the nonwoven fabric laminate of the agricultural covering material preferably has a MD (longitudinal direction) strength of not less than 20 N, a CD (cross direction) strength of not less than 10N, a MD elongation of not less than 50% and a CD elongation of not less than 50%. It more preferably has a MD strength of not less than 25 N, a CD strength of not less than 10N, a MD elongation of not less than 70% and a CD elongation of not less than 70%. The above strength and elongation are undesirable to be lower than the above ranges, because the nonwoven fabric laminate easily has holes or breakages, and broken parts or threads will enter and mix in crops easily.

The agricultural covering material of the present invention can be widely used for outdoor cultivation, tunnel cultivation, greenhouse cultivation and other cultivations in order to accelerate the growth of crops by retention of heat and humidity, to protect crops from stress of weather and to prevent corps from damages caused by insects, birds and the like in the outside. The agricultural covering material of the invention is preferably used for outdoor cultivation as an over covering material, because it can be very easily expanded and laid as it is directly covered on all the ridges including crops in a field and the ends thereof are fixed.

The agricultural covering material of the present invention can be used, in addition to the direct covering (over covering) for crops, as a covering material for inner covering in tunnel cultivation, tunnel-like covering, floating covering or covering for greenhouse cultivation in such cases that it is necessary to keep a sufficient inner space in consideration of the length of crops after the growth of the crops.

The agricultural covering material of the present invention can be used in the combined use with other agricultural covering materials such as nonwoven fabrics, films and the like in order to regulate the balance of heat retention property, humidity retention property and air permeation.

The nonwoven fabric laminate which constitutes the agricultural covering material of the present invention is a nonwoven fabric laminate having the above properties (i) to (iii) and obtainable by laminating various known nonwoven fabrics such as a melt blown nonwoven fabric, a spun bonded nonwoven fabric, a wet-laid nonwoven fabric, a dry-laid nonwoven fabric, a dry-laid pulp nonwoven fabric, a flash-spun nonwoven fabric or a split yarn nonwoven fabric.

Among these nonwoven fabric laminates, a laminate of the melt blown nonwoven fabric layer (A) and the spun bonded nonwoven fabric (B) is preferred, and further a nonwoven fabric laminate obtainable by laminating the melt blown nonwoven fabric layer (A) and the spun bonded nonwoven fabric layer (B) with partially heat fusion bonding is more preferred.

Examples of the composition of the nonwoven fabric laminate of the present invention are the melt blown nonwoven fabric layer (A)/the spun bonded nonwoven fabric (B) and the spun bonded nonwoven fabric (B) /the melt blown nonwoven fabric layer (A) /the spun bonded nonwoven fabric (B). Among them, the composition of the spun bonded nonwoven fabric (B) /the melt blown nonwoven fabric layer (A) /the spun bonded nonwoven fabric (B) is preferred in the viewpoint of the durability of the agricultural covering material.

Although the various kinds of methods as described later may be used as the method of partially heat fusion bonding the melt blown nonwoven fabric layer (A) and the spun bonded nonwoven fabric layer (B), embossing is preferably used. In the present invention, the term "partially heat fusion bonding" indicates that the layers are fusion bonded in an area proportion of 5 to 30 %, preferably 5 to 20 %.

<Melt blown nonwoven fabric layer (A)>

The melt blown nonwoven fabric layer (A) of the present invention is a nonwoven fabric layer including the above-described thermoplastic resin, and is a nonwoven fabric having a fiber diameter of usually 0.1 to 10 $\mu$m, preferably 1 to 10 $\mu$m, more preferably 3 to 10 $\mu$m, and a basis weight of usually 0.1 to 3 g/m$^2$, preferably 0. 3 to 3 g/m$^2$, more preferably 0. 5 to 3 g/m$^2$, furthermore preferably 0.5 to 2.5 g/m$^2$, most preferably 0.5 to 1.5 g/m$^2$.

It is not preferred to use the nonwoven fabric laminate which melt blown nonwoven fabric layer has a bases weight over the above range, because the laminate has excellent heat retention property and barrier properties but the transmittance thereof extremely decreases. As a result, cultivators cannot watch the inside of the covering or sunlight does not reach the inside of the covering sufficiently and thereby the growth of crops is easily damaged.

The melt blown nonwoven fabric layer (A) preferably has a fiber diameter and a basis weight in the above ranges, because the balance of heat retention property, barrier properties and air-permeability is excellent and the lowering of the transmittance caused by light diffuse reflection originated in thin fibers can be suppressed to the minimum. Furthermore, the uniformity of the above physical properties is excellent.

<Spun bonded nonwoven fabric layer (B)>

The spun bonded nonwoven fabric layer (B) of the present invention is a nonwoven fabric layer including the above thermoplastic resin and is a nonwoven fabric having a fiber diameter of usually not less than 12$\mu$m, and a basis weight of usually 5 to 25 g/m$^2$, preferably 5 to 20 g/m$^2$, more preferably 5 to 18 g/m$^2$, most preferably 5 to 10 g/m$^2$.

When the spun bonded nonwoven fabric has a basis weight over the above range, the light transmittance decreases and thereby the visual confirmation to crops will decrease. While, when the spun bonded nonwoven fabric has a basis weight lower than the above range, the strength is inferior and the air permeation and the variation in the physical properties become large and thereby the heat retention effect is decreased, the strength is insufficient to bring breakage and invading of harmful insects.

The spun bonded nonwoven fabric layer (B) of the present invention has a fiber diameter of not less than 15 $\mu$m, more preferably not less than 20 $\mu$m, furthermore preferably 30 to 55 $\mu$m from the viewpoint of visual confirmation to crops.

The fiber diameter and the basis weight of the spun bonded nonwoven fabric layer (B) are preferably in the above ranges, because in the case of using as the agricultural covering material, the good strength and the visual confirmation to crops are obtained.

The fiber of the spun bonded nonwoven fabric layer (B) may be a single fiber, a side by side type, concentric core-sheath type or eccentric type composite fiber, or a crimped fiber. The sectional form of the fiber may be a round form or a hetero sectional form such as a hollow type, a V-shaped type, a cross-shaped type or a T-shaped type. When the nonwoven fabric is necessary to have transparency, the round fiber form is preferably selected. When it is necessary to have heat retention property, the hollow type fiber form is preferably selected.

The spun bonded nonwoven fabric layer (B) of the present invention may be a nonwoven fabric made of a single fiber, a filament-mixed fiber obtainable by mixing a filament made of two or more different thermoplastic resins or a filament-mixed fiber obtainable by mixing two or more fibers having different forms and diameters.

<A method of producing the nonwoven fabric laminate constituting the agricultural covering material>

The agricultural covering material of the present invention can be produced by laminating various known nonwoven fabrics. For example, a laminate comprising the spun bonded nonwoven fabric and the melt blown nonwoven fabric is prepared by the combined use of a method of producing the spun bonded nonwoven fabric and a method of producing the melt blown nonwoven fabric.

Specifically, there is the following method. The thermoplastic resin is spun from a spinning nozzle, the resultant spun long fiber filament is cooled by a cooling fluid, tension is applied on the filament by drawing air and thereby the filament is made to have a prescribed fineness. The obtained filaments are collected on a moving collecting belt to prepare the spun bonded nonwoven fabric layer (B). Thereafter, above the spun bonded nonwoven fabric layer (B), the above thermoplastic resin is melt extruded, the fiber spun from a melt blow spinning nozzle is spun by a high-temperature and high-speed air as a very thin fiber flow, a very thin fiber web is prepared by a collecting device to form the melt blown nonwoven fabric layer (A). Consequently, by heat of the very thin fiber web, the spun bonded nonwoven fabric layer (B) and the melt blown nonwoven fabric layer (A) are partially fusion bonded with heat. If necessary, the spun bonded nonwoven fabric layer (B) is further laminated on the melt blown nonwoven fabric layer (A) and then partially bonded with heat under pressure.

The method of partially bonding the spun bonded nonwoven fabric layer (B) and the melt blown nonwoven fabric layer (A) with heat under pressure is not particularly limited. Various known methods are employable as the method. Particularly, the agricultural covering material is preferably prepared by bonding with heat under pressure such as embossing and the like because the obtained agricultural covering material has good strength and good heat retention property, and further improved transparency and good balance in softness and air-permeability.

In the case of fusion bonding with heat by heat embossing, the embossed area proportion is usually 5 to 30 %, preferably 5 to 20 %. The examples of the embossing mark include a round, an ellipse, an oval, a regular square, a rhombus, a rectangle, a square, a kilt, a lattice or a tortoise' shell, and a sequence thereof in which the above illustrated mark is a fundamental form.

The agricultural covering material of the present invention may be laminated with other layers as far as the object of the present invention is not missed.

Examples of the other layers which are laminated with the agricultural covering material of the present invention may include a knit fabric, a fabric, a film and a paper product. The nonwoven fabric of the present invention can be laminated (stuck) with the other layers by various known methods, for example, a heat fusion bonding method such as heat embossing or ultrasonic fusion bonding, a mechanical confounding method such as needle punch or water jet, a method of using an adhesive such as a hot melt adhesive or a urethane adhesive, or extrusion laminating.

The agricultural covering material of the present invention may be subjected to secondary processing such as gearing, printing, coating, laminating, heat treatment, shaping processing, hydrophilization processing or water-repellent finishing.

<Method of cultivating crops>

The growth of crops can be accelerated by covering a crop with the agricultural covering material of the present invention. Examples of the method of covering crops with the agricultural covering material of the present invention may include a method of directly covering (over covering) crops, or a method of covering crops with a space between crops and the agricultural covering material such as a tunnel-like covering or floating covering. Particularly, examples of crops which growth can be accelerated by directly covering with the agricultural covering material of the present invention include crops which heights are relatively low even after the growth, such as spinach, turnip, pumpkin, lettuce, sweet potato, Japanese radish or carrot, and not just for the above illustrated crops, the covering material can be used while heights of crops are low, such as in an early phase of development.

Moreover, crops may be covered with the agricultural covering material of the present invention in outdoor cultivation or in tunnel-like cultivation.

EXAMPLE

The present invention will be described in more detail with reference to the following examples hereinafter, but it is not limited by these examples.

In the examples and comparative examples, the physical properties and so on were measured by the following methods.

(1) Basis weight (g/m$^2$)

From a nonwoven fabric, 10 samples each having a size of 100 mm in a machine direction (MD) and 100 mm in a cross direction (CD) were collected and the mean value of the basis weights was calculated.

(2) Fiber diameter

Regarding the spun bonded nonwoven fabric layer, 10 samples each having a size of 10 mm x 10 mm were collected from the resultant nonwoven fabric and the diameter of the fiber was examined to the first decimal place in units of $\mu$m using an ECLIPSE E400 microscope manufactured by Nikon with a magnification of 20 times. Each one sample, the diameter on any 20 points was measured and the mean value thereof was determined. Regarding the melt blown layer, the samples were collected from the resultant nonwoven fabric, and observed with a magnification of 500 times or 1000 times using a scanning electron microscope. The fiber diameters ($\mu$m) of 30 composition fibers were measured and the mean value thereof was determined.

(3) Tensile strength (N/50 mm) and tensile elongation (%)

Measurement was conducted in accordance with JIS L 1906. From the agricultural covering material, a sample having 200 mm (MD) x 50 mm (CD) was collected and measured with a chuck distance of 100 mm, at a head speed of 100 mm/min on 5 points in MD and on 5 points in CD using a tensile tester Autograph AGS-J (manufactured by Shimazu Corporation) and the mean value thereof was calculated to determine the tensile strength (N/50mm) and the tensile elongation (%).

(4) Air-permeability (cm$^3$/cm$^2$/sec)

Samples having a size of 200 mm (MD) x 50 mm (CD) were collected from the agricultural covering material. Each two samples were piled up to prepare specimens. They were measured on air-permeability using a Frazier type air-permeability tester in accordance with JISL 1096. Each of the resultant values was divided by 2 (n=5), and the mean value thereof was taken as a measurement value.

(5) Light transmittance

The light transmittance was determined by the light transmittance test method in Kaken Test Center General Incorporated Foundation. A box having a size of 32 cm in length x 32 cm in width x 45 cm in height was set below a white circle line type light of 20 W.
At the ceiling part of the box, the nonwoven fabric which was an object of the measurement was attached, the distance between the fabric and a light source was kept to 25 cm and a photometer was set at 30 cm below from the nonwoven fabric surface of the ceiling part and inside the box.
A intensity of illumination L1 was measured without attachment of the sample nonwoven fabric in a darkroom, and next a intensity of illumination L2 was measured with attachment of the nonwoven fabric. The light transmittance was determined by the following formula.

```
Light transmittance (%) = L2/L1 x 100
```

(6) Growth of crops

Using the agricultural covering material, spinach and turnip were seeded in a field of 3 lines x 5m x 90cm wide ridge in December and harvested in March in next year with over covering cultivation. After the harvest, the heights of spinaches above the ground and the diameters of turnip heads were measured and the mean values of 3 samples were taken as measurement values.

(7) Heat retention property

The air temperature at 5 cm above the ridges, the ground surface temperature under the agricultural covering material and the underground temperature at 2 cm under the ridge ground were measured on each 3 points, and the mean values thereof were taken as measurement values.

Example 1

Using a propylene homopolymer (PP-1) having an MFR of 20g/10min, melt spinning was carried out at 230°C, resultant fibers were accumulated on a collecting surface to prepare a spun bonded nonwoven fabric layer (B-1) having a fiber diameter of 40 $\mu$m, a basis weight of 9 g/m$^2$.

Next, a propylene homopolymer (PP-2) having an MFR of 400 g/10 min was molten at 280 °C in an extruder, and by a melt blown method, fibers having a diameter of 3 $\mu$m were accumulated on the spun boded nonwoven fabric (B-1) to form a melt blown nonwoven fabric layer (A-1) having a basis weight of 0.5 g/m$^2$, wherein the melt blown method was carried out in a manner such that the resultant molten product was discharged from a spinneret and hot air of 280 °C was blown at an output port. Furthermore, on the side thereof, a spun bonded nonwoven fabric (B-2) similar to the spun bonded nonwoven fabric (B-1) was laminated and the three layers were unified by a heat embossing roll in an embossed area proportion of 18% to prepare an agricultural covering material such that the spun bonded fabrics were laminated on the both sides of the melt blown nonwoven fabric (hereinafter, abbreviated to "SMS"). The resultant agricultural covering material had a total basis weight of 18.5 g/cm$^2$.

The resultant agricultural covering material was evaluated by the above-described methods. The results are shown in Table 1.

Example 2

The procedure of Example 1 was repeated except that a spun bonded nonwoven fabric and a melt blown nonwoven fabric each having a fiber diameter and a basis weight as shown in Table 1 were used, to prepare an agricultural covering material instead of the agricultural covering material of Example 1.

The resultant agricultural covering material was evaluated by the above-described methods. The results are shown in Table 1.

Referential Examples 1 and 2

In each example, the procedure of Example 1 was repeated except that a spun bonded nonwoven fabric and a melt blown nonwoven fabric each having a fiber diameter and a basis weight as shown in Table 1 were used, to prepare an agricultural covering material instead of the agricultural covering material of Example 1.

The resultant agricultural covering material was evaluated by the above-described methods. The results are shown in Table 1.

Comparative Example 1

An agricultural covering material including a spun bonded nonwoven fabric having a fiber diameter of 40 $\mu$m and a basis weight of 20 g/m$^2$ which material was obtained by conducting melt-spinning at 230°C using a propylene homopolymer (PP-1) having an MFR of 20 g/10 min and accumulating the resultant fibers on the collecting surface was used instead of the agricultural covering material of Example 1.

The resultant agricultural covering material was evaluated by the above-described methods. The results are shown in Table 1.

Comparative Example 2

Ridges without the use of the agricultural covering material were made for the comparison. The heat retention property and the growth observed in the ridges were taken as standards in the examples and the comparative examples.

Comparative Example 3

The procedure of Example 1 was repeated except that a spun bonded nonwoven fabric and a melt blown nonwoven fabric each having a fiber diameter and a basis weight as shown in Table 1 were used, to prepare an agricultural covering material instead of the agricultural covering material of Example 1.

The resultant agricultural covering material was evaluated by the above-described methods. The results are shown in Table 1.

Comparative Example 4

The procedure of Example 1 was repeated except that only a spun bonded nonwoven fabric having a fiber diameter and a basis weight as shown in table 1 was used, to prepare an agricultural covering material instead of the agricultural covering material of Example 1.

The resultant agricultural covering material was evaluated by the above-described methods. The results are shown in Table 1.

Table 1

| | | | Example | | Referential Example | | Comparative Example | | | |
|---|---|---|---|---|---|---|---|---|---|---|
| | | | 1 | 2 | 1 | 2 | 1 | 2 | 3 | 4 |
| First layer | Spun bonded layer (S) | Resin | PP-1 | PP-1 | PP-1 | PP-1 | PP-1 | - | PP-1 | PP-1 |
| | | Fiber diameter | 35$\mu$m | 35$\mu$m | 15$\mu$m | 15$\mu$m | 35$\mu$m | - | 13$\mu$m | 21$\mu$m |
| Second layer | Melt blown layer (M) | Resin | PP-2 | PP-2 | PP-2 | PP-2 | - | - | PP-2 | - |
| | | Fiber diameter | 3$\mu$m | 10$\mu$m | 3$\mu$m | 3$\mu$m | - | - | 2 $\mu$m | - |
| Third layer | Spun bonded layer (S) | Resin | PP-1 | PP-1 | PP-1 | PP-1 | - | - | PP-1 | - |
| | | Fiber diameter | 35$\mu$m | 35$\mu$m | 15$\mu$m | 15$\mu$m | - | - | 13$\mu$m | - |
| Composition | | | SMS | SMS | SMS | SMS | S | - | SMS | S |
| Basis weight composition (g/cm$^2$) | | | 9/0.5/ 9 | 9/1/9 | 6.5/2/ 6.5 | 6/1/6 | 20/-/- | -/-/- | 7/1/7 | 20/-/- |
| MD tensile strength (N/50mm) | | | 38 | 36 | 29 | 29 | 31 | - | 30 | 31 |
| CD tensile strength (N/50mm) | | | 17 | 16 | 15 | 14 | 14 | - | 15 | 19 |
| MD tensile elongation | | | 105% | 110% | 60% | 55% | 120% | - | 55% | 80% |
| CD tensile elongation | | | 100% | 105% | 40% | 45% | 110% | - | 45% | 110% |
| Transparency | Transmittance (%) | | 82% | 85% | 75% | 76% | 87% | 100% | 73% | 80% |
| Air-permeability | Air-permeability (cm$^3$/cm$^2$/s) | | 358 | 392 | 176 | 230 | 868 | maximum | 183 | 480 |
| Heat retention property | Air temperature | | 23°C | 23°C | 23°C | 23°C | 23°C | 23°C | 23°C | 23°C |
| | Ground surface temperature | | 38°C | 40°C | 38°C | 40°C | 36°C | 30°C | 37°C | 34°C |
| | Underground temperature | | 26°C | 27°C | 26°C | 27°C | 24°C | 22°C | 25°C | 23°C |
| Growth | Height of spinach | | 30cm | 29cm | 24cm | 28cm | 18cm | 14cm | 22cm | 19cm |
| | Diameter of turnip head | | 5cm | 5cm | 5cm | 5cm | 4cm | 2cm | 4cm | 3cm |

**Claims**

1. An agricultural covering material comprising a nonwoven fabric laminate having;

   (i) a light transmittance of 80% or more,
   (ii) an air-permeability of 50 to 400 $cm^3/cm^2/sec$ and
   (iii) a basis weight of 10 to 30 $g/cm^2$.

2. The agricultural covering material according to claim 1, wherein the nonwoven fabric laminate is obtainable by laminating a spun bonded nonwoven fabric (B) having a basis weight of 5 to 25 $g/m^2$ and comprising thermoplastic resin fibers having a fiber diameter of 15 $\mu$m or more on at least one side of a melt blown nonwoven fabric (A) having a basis weight of 0.1 to 3 $g/m^2$ and comprising thermoplastic resin fibers having a fiber diameter of 0.1 to 10 $\mu$m, with partially heat fusion bonding.

3. The agricultural covering material according to claim 1, wherein the nonwoven fabric laminate is obtainable by laminating the spun bonded nonwoven fabrics (B) on both sides of the melt-blown nonwoven fabric (A).

4. The agricultural covering material according to claim 2, wherein the thermoplastic resin fibers are olefin polymer fibers.

5. The agricultural covering material according to claim 4, wherein the olefin polymer fibers are propylene polymer fibers.

6. A method of cultivating a crop which method comprises covering a crop using the agricultural covering material according to any one of claims 1 to 5.

## INTERNATIONAL SEARCH REPORT

| | International application No. |
|---|---|
| | PCT/JP2012/070262 |

### A. CLASSIFICATION OF SUBJECT MATTER
*A01G13/02*(2006.01)i, *A01G9/14*(2006.01)i, *D04H1/544*(2012.01)i, *D04H3/16* (2006.01)i

According to International Patent Classification (IPC) or to both national classification and IPC

### B. FIELDS SEARCHED

Minimum documentation searched (classification system followed by classification symbols)
A01G13/02, A01G9/14, D04H1/544, D04H3/16

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2006-149263 A  (MKV Puratekku Kabushiki Kaisha), 15 June 2006 (15.06.2006), claims; paragraphs [0011], [0014] (Family: none) | 1-6 |
| Y | Microfilm of the specification and drawings annexed to the request of Japanese Utility Model Application No. 191416/1980 (Laid-open No. 111890/1982) (Asahi Chemical Industry Co., Ltd.), 10 July 1982 (10.07.1982), specification, page 3, lines 2 to 6 (Family: none) | 1-6 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 October, 2012 (24.10.12) | 06 November, 2012 (06.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2" align="center">**INTERNATIONAL SEARCH REPORT**</td><td>International application No.<br>PCT/JP2012/070262</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 5-304836 A  (Kuraray Co., Ltd.),<br>19 November 1993 (19.11.1993),<br>paragraph [0007]<br>(Family: none) | 2-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO H419928769 A
- WO 2501455 A